Europäisches Patentamt

European Patent Office

Office européen des brevets

(19)

(11) Publication number: **0 106 476**

A1

(12) # EUROPEAN PATENT APPLICATION

(21) Application number: 83305065.1

(22) Date of filing: 01.09.83

(51) Int. Cl.³: **H 04 M 1/08**

(30) Priority: 09.09.82 GB 8225790

(43) Date of publication of application:
25.04.84 Bulletin 84/17

(84) Designated Contracting States:
AT BE CH DE FR IT LI LU NL SE

(71) Applicant: PLESSEY OVERSEAS LIMITED
Vicarage Lane
Ilford Essex IGI 4AQ(GB)

(72) Inventor: Hickling, David John
42 Holkham Avenue
Chilwell Beeston Nottingham(GB)

(74) Representative: Goodman, Christopher
The Plessey Company plc
Beeston Nottingham NG9 1LA(GB)

(54) **Telephone apparatus.**

(57) The cradle switch for a telephone consists of a micro-switch (10) activated by one end of a lever (18) which is contacted and moved by the handset when the handset is placed in position on the telephone body. The lever is counter-balanced by a weight (24) so that the lever moves clear of the microswitch when the handset is removed. This weight is in its lowermost position when the telephone is in use and any sudden jolts caused, for example, by placing the telephone down quickly on to a surface will not result in the inadvertent operation of the lever and hence the micro-switch.

FIG.1.

- 1 -

## TELEPHONE APPARATUS

This invention relates to telephone apparatus and more particularly to switches for telephones, such as cradle switches.

With most known telephones the cradle switch is operated by the weight of the handset acting on externally protruding plungers or an actuator lever. The restoring force for the actuator lever is usually provided by the internal switch mechanism itself, but an auxiliary spring may also be used. This spring usually produces an undesirable increase in resistance as the actuator lever descends.

With the trend towards more compact "carry" phones with lighter bodies and handsets which do not use the full weight of the handset to operate the cradle switch, increasingly more sensitive switches must be used. These switches are so sensitive that they can be operated inadvertently by sudden movements of the telephone body due to the inertial forces of the actuator lever on the switch. For example, if the telephone body is suddenly placed down on a solid surface during a call, the switch can operate, cutting the call off.

It is an object of the invention therefore to provide telephone apparatus having a switch in which the possibility of inadvertent operation of the switch is described is removed or significantly reduced.

According to the present invention telephone apparatus comprises a switch and a gravity operated switch actuator, the actuator permitting the switch to move to a first position when the actuator is acted on by gravity alone, and urging means for overcoming the gravitational force to cause the actuator to bias the switch to a second position.

Preferably in the first position of the switch the telephone apparatus is made "live" or operative by a user, and the telephone apparatus is rendered inoperative in the second position of the switch.

Preferably the actuator comprises a lever having first and second ends, a pivot intermediate of its ends and a weight at its first end.

Preferably the second end is adapted to contact the switch.

Thus the second end of the lever may pivot out of contact with the switch under the action of gravity and into contact with the switch when the gravitational force is overcome by the urging means.

The urging means for overcoming the gravitational force may comprise the telephone apparatus handset which contacts the second end of the lever and pivots it into contact with the switch when the handset is located on the

- 3 -

telephone apparatus, the lever pivoting back under the force of gravity when the handset is removed from the telephone apparatus.

An embodiment of the invention will now be described by way of example only with reference to the accompanying drawings in which

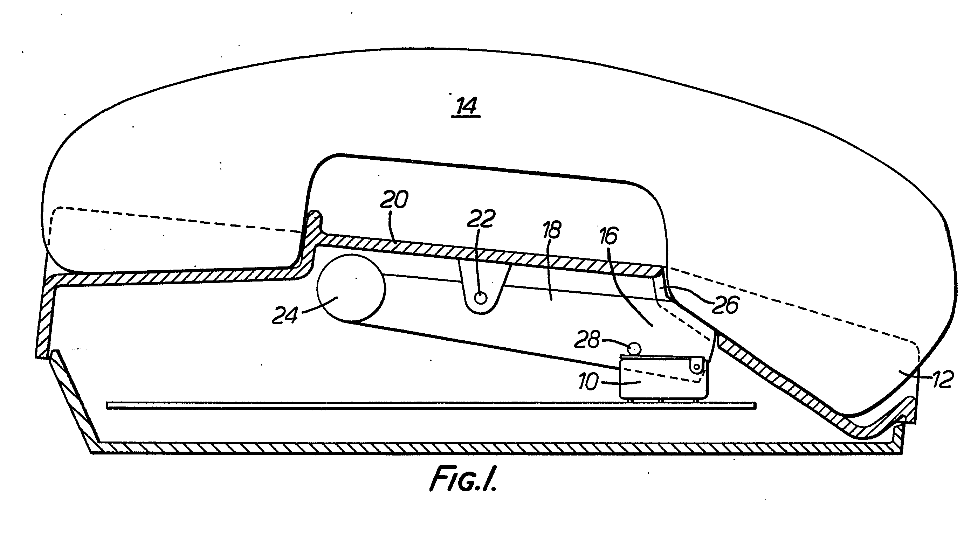

Figure 1 is a cross-sectional view through telephone apparatus according to the invention with the handset in position, and

Figure 2 is a cross-sectional view through the telephone apparatus with the handset removed.

The telephone apparatus illustrated is a typical modern design of telephone having a set of push buttons (not shown) on the right hand side and a handset 14 located along the left hand side of the telephone. The cradle switch 10 consists of a microswitch 10 and is operated by one end 12 only of the handset via the end 16 of a lever 18.

The lever 18 is pivoted to the body 20 of the telephone at a pivot 22 intermediate of its ends, the end of the lever 18 opposite the end 16 being provided with a weight 24. The weight 24 is adjusted to give a small turning moment to the lever 18 in an anticlockwise direction, when viewed in the figures, about the pivot 22. The end 12 of the handset contacts the end 16 of the

- 4 -

lever 18 which projects through a slot 26 formed in the body 20, and the weight of the end 12 is sufficient to overcome the weight 24. The lever 18 is therefore rotated in a clockwise direction when the handset is placed in its position on the body and a projection 28 formed on the lever 18 actuates the microswitch 10. In this position the telephone is inoperative by the subscriber.

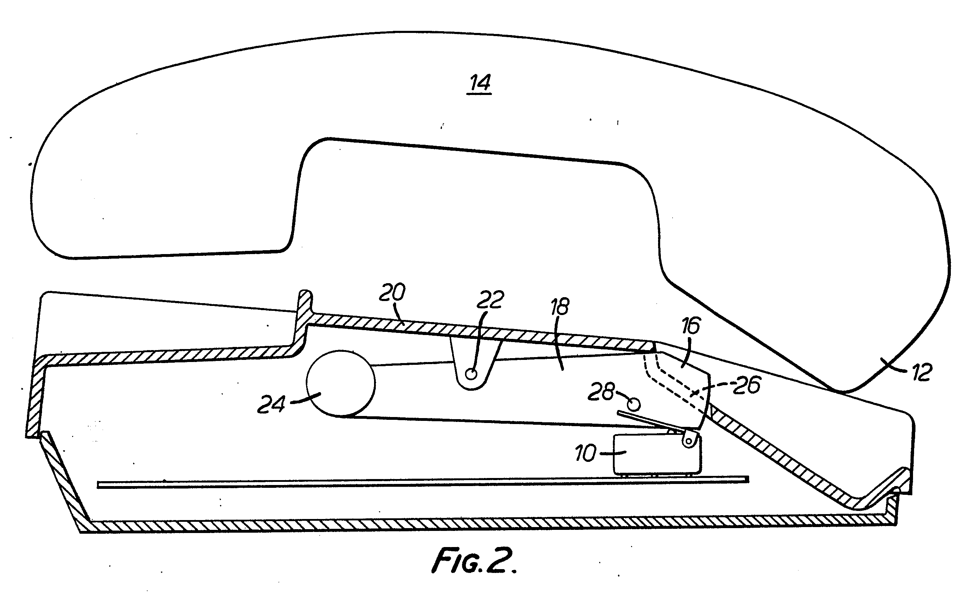

When the handset is lifted, as in Figure 2, the weight rotates the lever 18 until the projection 28 allows the microswitch to operate thus putting the telephone in an operative condition for the subscriber.

It will be seen that in the operative position of the telephone the weight 24 is in its lowermost position, and any sudden jolts caused, for example, by placing the telephone down quickly on to a surface, will not result in the inadvertent operation of the microswitch 10 since the weight 24 is being urged downwards by gravity.

It could be argued that if the telephone is lifted suddenly to a certain height, then the weight 24 would cause the microswitch 10 to be operated, thus cutting off the call. To do this though, the telephone would need to be lifted and then stopped with a force larger than the product of the resultant mass of the weight 24 and gravitational acceleration. This would be quite high and

- 5 -

is therefore considered to be far less likely than being placed down suddenly on to a solid surface.

The microswitch 10 could easily be operated the other way round to the one shown. For example, the microswitch could be located above the end 16 of the lever 18 so that the telephone is made operative by the end 16 pressing on the microswitch. Alternatively the microswitch 10 could be located above or below the weight 24 so that the weight would operate the microswitch directly. Either the mouthpiece or the earpiece can be used to contact the end 16 of the lever 18.

Whilst a telephone of the type using only one connection to the cradle switch using only the weight of one end of the handset has been described, the invention can easily be applied to any other design of telephone such as the more traditional type with a transverse handset and two plungers connected to the cradle switch which are acted on by the whole weight of the handset.

- 6 -

CLAIMS:-

1.    Telephone apparatus comprising a switch and a gravity operated switch actuator, the actuator permitting the switch to move to a first position when the actuator is acted on by gravity alone, and urging means for overcoming the gravitational force to cause the actuator to bias the switch to a second position.

2.    Telephone apparatus as claimed in claim 1 in which in the first position of the switch the telephone apparatus is made "live" or operative by a user, and the telephone apparatus is rendered inoperative in the second position of the switch.

3.    Telephone apparatus as claimed in claim 1 or claim 2 in which the actuator comprises a lever having first and second ends, a pivot intermediate of its ends and a weight at its first end.

4.    Telephone apparatus as claimed in claim 3 in which the second end of the lever is adapted to contact the switch.

5.    Telephone apparatus as claimed in claim 4 in which the second end of the lever pivots out of contact with the switch under the action of gravity and into contact with the switch when the gravitational force is overcome by the urging means.

6.    Telephone apparatus as claimed in any of claims 3 to 5

- 7 -

in which the urging means for overcoming the gravitational
force comprises the telephone apparatus handset which
contacts the second end of the lever and pivots it
into contact with the switch when the handset is located
on the telephone apparatus, the lever pivoting back
under the force of gravity when the handset is removed
from the telephone apparatus.

7.   Telephone apparatus constructed and adapted to
operate substantially as hereinbefore described with
reference to the accompanying drawings.

Fig.1.

**FIG.2.**

14

12

26

16

18

22

20

24

28

10

## EUROPEAN SEARCH REPORT

European Patent Office

Application number

EP 83 30 5065

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-B-1 090 725 (KRONE) * Column 3, line 29 - column 4, line 59; figures * | 1-7 | H 01 M 1/08 |
| A | US-A-3 824 353 (HOWE) * Column 3, line 48 - column 9, line 9; figures * | 1,2,6, 7 | |
| A | FR-A-1 312 911 (BRIS) * Whole document * | 3-5 | |
| | | | **TECHNICAL FIELDS SEARCHED (Int. Cl. ³)** |
| | | | H 04 M H 01 H G 08 B |

The present search report has been drawn up for all claims

| Place of search | Date of completion of the search | Examiner |
|---|---|---|
| THE HAGUE | 14-12-1983 | KEPPENS P.M.R. |